# EUROPEAN PATENT SPECIFICATION

(11) **EP 1 263 169 B1**
(45) Date of publication and mention of the grant of the patent: **01.12.2004**
(21) Application number: 01112469.0
(22) Date of filing: 22.05.2001
(51) Int. Cl.: H04L 12/40, G06F 13/00

(54) **Method for evaluating information about a plurality of nodes connected to a network**
Verfahren zur Auswertung von Information über mehrere Knoten eines Netzwerks
Méthode d'évaluation d'information sur plusieurs noeux connectés à un réseau

(43) Date of publication of application: 04.12.2002
(73) Proprietor: Sony International (Europe) GmbH, 10785 Berlin (DE)
(72) Inventor: Schwager, Andreas, c/o Advanced Techn. Center Stgt, 70327 Stuttgart (DE); Clanget, Ulrich, c/o Advanced Techn. Center Stgt., 70327 Stuttgart (DE); Mayer, Matthias, c/o Advanced Techn. Center Stgt., 70327 Stuttgart (DE); Tiedemann, Stephen, Advanced Techn. Center Stgt., 70327 Stuttgart (DE); Szucs, Paul, c/o Advanced Techn. Center Stgt., 70327 Stuttgart (DE); Terranova, Sabine, Advanced Techn. Center Stgt., 70327 Stuttgart (DE)
(74) Representative: Müller - Hoffmann & Partner

(56) References cited:
- EP-A- 0 920 156
- EP-A- 0 929 170
- EP-A- 0 949 782
- EP-A- 1 009 186
- EP-A- 1 049 020
- EP-A- 1 094 638
- US-A- 5 724 517
- US-A- 5 883 621
- US-A- 6 157 972

## Description

The present invention relates to a method for evaluating information about a plurality of nodes connected to a network. In addition, the present invention relates to an apparatus for evaluating information about a plurality of nodes connected to a network, and to a computer program product, comprising computer program means adapted to perform said method.

It is generally known to use appropriate standards for networks in order to manage a plurality of various devices which are connected to said network. These standards, of which the IEEE 1394 has become very important in recent years, enable high performance multimedia connections and control of business and consumer electronic devices, such as camcorders, televisions, stereos, CD changers, set-top boxes, mixing consoles and music keyboards, as well as traditional PC devices such as hard drives, CD-ROM drives, printers and scanners, and docking stations for portable computers. In general, devices connected to a network are detected by reading their configuration ROM-data, or by asking any properties by using various protocols. Further, in this context, so-called "self-ID packets" are sent from each device to the network for providing more information about that particular device.

DE 199 11 318 A1 discloses a control box monitoring device determining whether a plug-in terminal for functional plug-in modules or for a network card is used or not and what kind of modules or card is inserted to monitor and control control box functions.

US 5,910,776 describes a method and an apparatus for identifying, locating or monitoring equipment or other objects having electrical plug-type connectors or any other complementary connector/reptacle combinations, e. g. a hose/bib, a key/lock, telephone plug/jack, connectors and reptacles used in computer systems, or other types of connector and reptacle combinations. It is suggested that a radio frequency identification transponder is housed on, around or within a connector which can be read by a corresponding reader housed at a connector reptacle connected to a computer tracking system. The connection of the reader to the computer tracking system can be incorporated into existing electrical wiring which is connected with the plug reptacle combination or can be wired separately.

EP 0 920 156 A2 discloses a method of evaluating a connection status of nodes connected to a network corresponding to the IEEE 1394 standard.

US 5,724,517 A discloses a method of generating a topology map.

EP 0 949 782 A discloses a method for searching a network environment. Thereby, nodes of an IEEE 1394 network allocate a node ID to themselves.

EP 1 009 186 A2 discloses an apparatus connected to a serial bus of the IEEE 1394 standard.

EP 1 049 020 A2 relates to a data transfer control device for transferring data among a plurality of nodes that are connected to a bus.

US 6,157,972 A1 discloses a method for identifying nodes connected to an IEEE 1394 serial bus.

US 5,883,621 A discloses a method for displaying a topology of a network as part.

However, detecting devices connected to whatever kind of network is time-consuming because in general their configuration ROM-data have to be read out. Further, in case that two identical devices are connected to said network, it is not possible at present to distinguish these devices from each other.

It is an object underlying the present invention to provide a method and an apparatus for evaluating information about a plurality of nodes connected to a network, by which more detailed knowledge about said nodes is provided in a more comfortable way.

This object is solved by a method for evaluating information about a plurality of nodes connected to a network according to claim 1, as well as an apparatus according to claim 10 and a computer program product according to claim 11. Preferred embodiments of said method are defined in dependent claims 2 to 9, respectively.

The method according to the present invention for evaluating information about a plurality of nodes connected to a network, wherein each node comprises at least one terminal, comprises the steps of detecting a connection status or at least one terminal of each node, and identifying a topology of said plurality of nodes to obtain a property of at least one node.

Preferably, said method according to the present invention may be applicable for a home network which may comprise various consumer electronic devices. In the following, by way of example, "nodes" as defined by said method are only referred to "devices" for reasons of simplicity. In general, said home network is "hot-pluggable" which means that a user can simply add or remove a device to or from the network. In this context, a change of the network configuration is automatically detected by a bus reset within said network. Thus, there is no need for the user to manage a configuration set-up of said network. Therefore, the method enables to use the knowledge of the hardware architecture, i. e. its topology, which is already present before performing said method, to obtain properties of a node or device within said network, e.g. by identifying the root node of said network.

A main advantage of the present invention is that said method offers more advanced information or services to the user with respect to a device which is connected to the network. By evaluating information about a plurality of devices and by identifying a topology of these devices, a property of at least one device is obtained, which for example may be a specific use of said device.

Preferably, further information about said at least one terminal of each node may be detected in order to obtain said property of said at least one node. Based on the data included within a self-ID packet which may be sent from each node to the network, it may be possible e.g. to get said information either directly from said data, or via accessing other data bases. The self-ID packet must contain the information about the node number of this node and the plug status that shows if the plug is connected to a child or parent node.

Preferably, said further information may include the physical location of the terminal at the device, e.g. "terminal is located at front side of device" and "terminal is located at rear side of device". In this context, a device may represent a node connected to the network. Alternatively, or in addition, said information may include whether the terminal is a specific plug type. For a television e.g., said terminal may be a male or female plug of a cinch, scart or DIN type. In other devices, said terminal may also be of any other appropriate plug type by which the necessary exchange of data between said nodes and the network can be ensured, but which plug type also enables to draw conclusions about the properties of the connected devices.

By way of example, all devices which are used in a stationary way within said network might be connected to the rear side plug of another device, respectively, wherein devices which are used in a portable or mobile way within said network might be connected to the front side plug of another device, respectively. However, initially a user may not have a complete knowledge about the network topology, e.g. a location and at least a corresponding property of a specific device.

In this case, performing the method according to the present invention has the result that the user is provided with the information which devices are stationary in the network, and which devices are portable in the network. In other words, with respect to the above example, the method provides the information to the user that a device which is connected to a rear side of another device may have the property "stationary", wherein a device which is connected to a front side of another device may have the property "portable". Further, as for consequence, two devices of the same type may be distinguished from each other depending on the location of the terminal or plug, respectively, by which they are connected to another device and to the network, respectively. As for example, a camera may have the property "stationary" when it is used as a fixedly installed door camera, wherein another camera of another type, or of the same type, may have the property "portable" when it is used as a mobile home video camcorder.

Still further preferably, said plurality of devices may include parent devices and child devices, wherein said connection status of at least one terminal of each device is whether said terminal is not present on said network, not active on this network, i. e. disabled, disconnected or suspended, or active and connected to a parent device or to a child device. This relevant information may be comprised within the self-ID packet of each node and may be transmitted to the network while connecting the device thereto such that subsequently said information could be suitably evaluated by said method in order to detect a property of at least one device, as mentioned above.

Preferably, each device connected to the network may be given a specific device number according to an enumeration strategy. Thus, it may be possible to distinguish one device from another while identifying said topology of said plurality of devices.

Still preferably, said enumeration strategy used in the method according to the present invention may be the enumeration strategy of an IEEE 1394 bus. The corresponding self-ID packet referring to this standard contains all the necessary information such that a device may be properly identified within the network when it is connected thereto. In this way, a specific identifier, e.g. a node number may be assigned to each device, which is useful for recognizing said devices while said method is performed. Further, as mentioned above, each self-ID packet may provide the necessary data for detecting further information about said at least one terminal of each node, which are either directly contained within said self-ID packet, or which may be evaluated via other data bases.

All devices of which only a parent terminal is connected to a parent device may be identified in a first step i). Such devices may be denoted as leaf devices in the following. Subsequently, in a second step ii), it may be detected whether there are more unidentified devices connected to the network or not. In case that more unidentified devices are detected, the method proceeds with a third step iii). In this step, a next unidentified node may be identified which has the lowest node number, wherein said node number is set as Nn.

In the following, the method proceeds with a fourth step iv) in which it may be detected whether child terminals of said node having the number Nn have connections or not. In case that connections are detected at said child terminals, the method proceeds with a fifth step v); otherwise the method returns to the third step iii).

According to the fifth step v), an unidentified child terminal may be identified having the highest terminal number which may be set as Tn. Further, said child terminal may be assigned to an unidentified parent terminal of a node having a node number equal to Nn minus 1. Subsequently, according to a sixth step vi), it may be detected whether said node having the node having the number Nn comprises more unidentified child terminals which have connections. In this case, the method proceeds to a seventh step vii); otherwise the method returns to the second step ii).

According to the seventh step vii), a child terminal of said node having the number Nn may be identified which has the largest terminal number smaller than Tn. Next, said child terminal may be assigned to an unidentified parent terminal of a node having the largest node number smaller than Nn, wherein-after the method returns to the sixth step vi).

Still further preferably, said method according to the present invention may be performed after each bus-reset within said network. As for result, the user is provided with updated information about a property of said at least one device, respectively, whenever the configuration of said network is changed upon connecting or disconnecting a device thereto.

Still further preferably, the IEEE 1394 standard may be used as a basis for said network. Hence, an optimum solution is provided for managing a plurality of various devices connected to a network, wherein a high bandwidth may be combined with guaranteed delivery of time-critical data through isochronous channels.

Further, the object underlying the present invention is solved by an apparatus for evaluating information about a plurality of nodes connected to a network, wherein said apparatus may be adapted to perform the method according to the present invention as described above.

A further object underlying the present invention is to provide a computer program product which provides the user of a network with additional information about devices connected thereto in an easy and fast manner.

This object is achieved by a computer program product according to claim 12, wherein said computer program product may comprise computer program means adapted to perform all steps defined in anyone of claims 1 to 10, when said computer program product is executed on a computer, digital signal processor, or the like.

The accompanying drawings which are incorporated in and constitute a part of this specification illustrate an exemplary preferred embodiment of the invention and, in accordance with a general description of the invention given above, and the detailed description of the embodiment given below serve to explain the principle of the invention, wherein:
- **Fig. 1**: illustrates an example of a Self-ID packet used for an embodiment of the present invention;
- **Fig. 2**: illustrates a tree structure of a plurality of nodes connected to a network, for which a method according to the present invention is performed; and
- **Fig. 3**: illustrates a flow chart explaining how to perform a preferred embodiment of a method according to the present invention.

In the following a preferred embodiment of the present invention is explained by use of the accompanying Figures and by use of tables which will be described further below. However, the invention is not limited to this specific embodiment which is an advantageous realization and which explains in particular a method according to the present invention by which a property of at least one node our of a plurality of nodes connected to a network may be obtained.

It is assumed for the following explanation of the preferred embodiment that a plurality of nodes are connected to a network in accordance with the IEEE 1394 standard. The IEEE 1394 standard defines both a backplane environment and a cable environment. A physical layer thereof may consist of physical signaling circuits and logic circuits that are responsible for power-up initialization, arbitration, bus reset, sensing, data signaling and the like. Further details of this standard are commonly known in the state of the art, and thus are not further discussed. Of course, the network may be in accordance with any other standard having similar characteristics to the IEEE 1394 standard which enable that the method according to the present invention may be similarly performed therewith. Further, it is to be understood that any node connected to the network may represent for e. g. a consumer electronic device or the like, which may be connected to a home network. In the following, reference is made to "node" and "network" by way of example only.

Besides, a hardware of a node which is to be used in the example as explained further below is designed such that one plug or terminal, respectively, of the IEEE I394 physical layer is located at a front side of a node, wherein the other terminals are located at a rear side of the node. Further, it is presumed that the enumeration strategy of the IEEE 1394 bus and all self-ID packets of the nodes connected to the network are known in order to ensure a suitable evaluating of information about the node for managing the network.

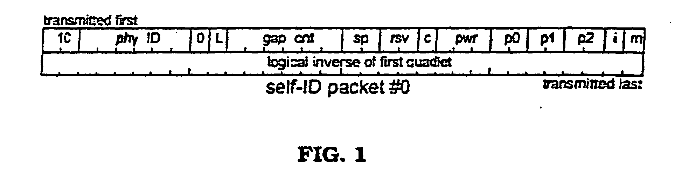

The self-ID packets of nodes, which are important for performing said method, are defined in accordance with the IEEE 1394 standard. Preferably, these are self-ID packets of a 3-port physical layer, of which an exemplary illustration is shown in Fig. 1. Next to further information which is contained in such a self-ID packet, which is neither relevant for performing the method according to the present invention nor for the understanding of the latter, and which is thus not further discussed in this context, such a self-ID packet provides important information about a connection status of each of the terminals and ports, respectively, of a respective node. In the following, a port of a node is referred to as "terminal", for reasons of simplicity. Although not illustrated in Fig. 1, a self-ID packet may provide the information e.g. on which side of a node, e.g. a front side or a rear side, an at least one terminal thereof is located, and/or which type of plug said terminal belongs to, e. g. said terminal is a cinch, scart or DIN-plug and the like. Further, as can be gathered from the first line of the self-ID packet shown In Fig. 1, the 24th-29th bits contain information about the parameters "p0", "p1" and "p2". This is for example the self-ID packet for a 3 port device. There might be devices with more or less than three ports, too. Said parameters "p0", "p1" and "p2" transmit the relevant information to the IEEE 1394 bus whether the respective terminal of a node is not present on this physical layer, not active, which means that its terminal may be disabled, disconnected or suspended, or active and connected to a parent node, or active and connected to a child node.

In the following, reference is made to an example of a plurality of eight nodes connected to a network, to which node numbers starting with "0" have been assigned. As for result, the first node has the number "0", wherein the eighth node has the number "7". Each of said nodes comprises three terminals, i. e. P0, P1 and P2, respectively, which may be either located at a front side, or at a rear side, of each node, respectively. The illustration in Table 1 further explains said example:

**Table 1**

| **NODE NUMBER** | **P0** | **P1** | **P2** |
|---|---|---|---|
| 0 | P | | |
| 1 | | | P |
| 2 | P | C | |
| 3 | P | C | C |
| 4 | P | | |
| 5 | | P | |
| 6 | P | C | |
| 7 | C | C | C |

Each of said terminals P0, P1 and P2, respectively, as explained above, may be either not present or not active on the network, or may be active and connected to a parent node or to a child node. In detail, in case that a terminal is active and connected to a parent node, it is indicated with "P" in said Table 1. On the other hand, if a terminal is active and connected to a child node, it is indicated with "C" in said table 1. However, no indication is made if a terminal is not present or not active on the network, if no other node is connected to said terminal.

With respect to the example illustrated in Table 1, a connection status of each terminal of the nodes having the numbers "0", "2", "3" and "7" are briefly explained. In detail, the node having the number "0" has only one connection to a parent node at its terminal P0. Correspondingly, the terminal P0 of the node having the number "0" is indicated with P. Because terminals P1 and P2 of said node have no connection to another node, no indication is to be found in the corresponding columns of Table 1.

Further, the node having the number "2" has one connection at its parent terminal to another parent node. As for consequence, the terminal P0 of the node having the number "2" is indicated with P. Further, the terminal P1 of the node having the number "2" has a connection to a further child node, which is indicated with C, correspondingly. Because the terminal P2 of said node number has no connection to another node, no indication is made in the respective column of Table 1.

With respect to the node having the number "3", both terminals P1 and P2 are indicated with C, because they have a respective connection to another child node. The terminal P0 of said node is indicated with P, because of a connection thereof to another parent node.

Further, Table 1 discloses that the node having the number "7" has three connections to respective child nodes. As for consequence, each of the terminals P0, P1 and P2, respectively, of said node is indicated with C. On the other hand, there is no parent terminal present at said node.

In this context, the connection status of the terminals of the node having the numbers "1", "4", "5" and "6", respectively, is not further described in detail since it can be taken from Table 1 in an analogous way to the explanation made above.

It is to be understood that the distinction "parent node" and "child node" is not an absolute criteria, but has to be rather seen from a relative point of view. In other words, on the one hand a specific node may be "parent node" in the case that two other nodes are connected thereto as child nodes, and on the other hand it may also be "child node" itself when it is connected together with other child nodes to a distinct parent node. Further, a node having only one connection to a parent node is referred to "leaf node" in the following. Still further, a node having only connections to other nodes at its child terminal, and which does not have any connection to its parent terminal, is referred to "root node".

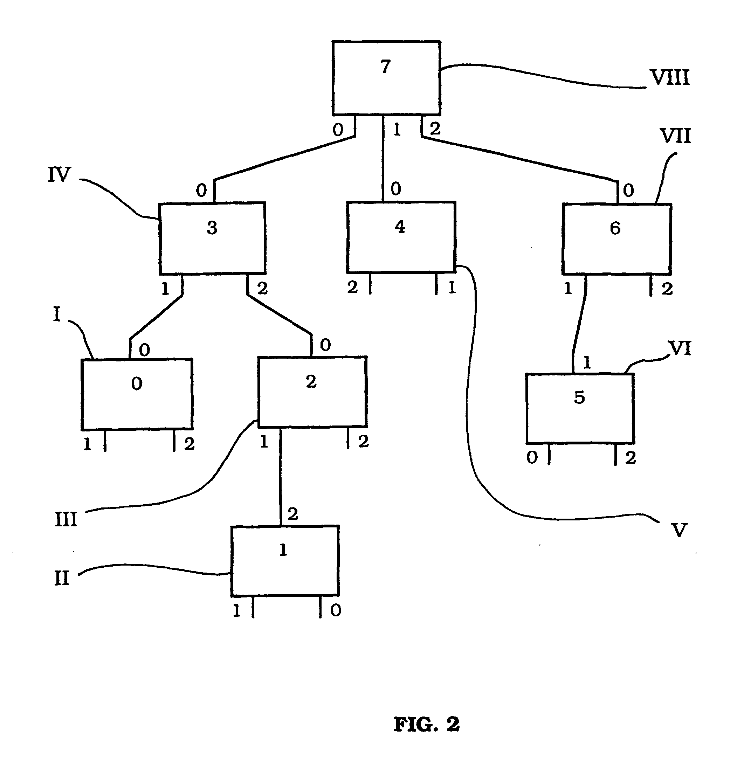

Fig. 2 illustrates a tree structure of a plurality of eight nodes in accordance with the example which has been explained above with reference to Table 1.

Said illustration of Fig. 2 comprises icons which are assigned to eight nodes connected to a network. In said example, said plurality of eight nodes consists of a first node I to an eighth node VIII, to which respective node numbers from "0"-"7" have been assigned, respectively. In detail, said respective node numbers are indicated inside the icons assigned to the corresponding first to eighth node I-VIII, respectively. Further, the respective three terminals of each node are illustrated with arabic numbers, i. e. 0, 1 or 2, respectively, in conjunction with short lines, which are located either over a top line or under a bottom line of each icon. In the following, said terminals will be indicated by "P" or "C", depending on whether they serve as parent terminal or child terminal, respectively, and further by their respective arabic number.

In accordance with the explanation made above with respect to table 1, this tree structure clearly reveals the information that the first node I, the second node II, the fifth node V and the sixth node VI, having the node numbers "0", "1", "4" and "5", respectively, are leaf nodes. Further, the eighth node VIII having the number "7", is the root node, since it has three child terminals 0, 1 and 2, respectively, which are connected to the fourth icon IV, the fifth icon V and the seventh icon VII, respectively, having the numbers "3", "4" and "6", respectively.

In general, the method comprises the steps of detecting a connection status of at least one terminal of each node, and identifying a topology of said plurality of nodes to obtain a property of at least one node.

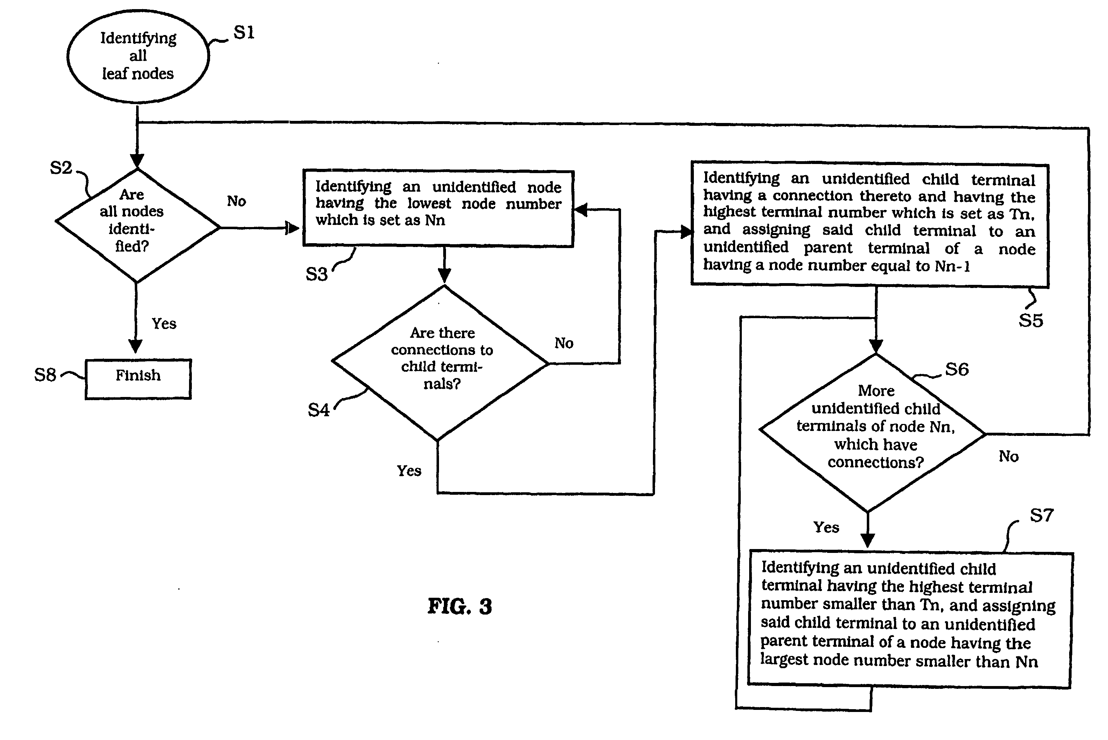

Fig. 3 shows a flow chart which illustrates a preferred embodiment of said method comprising the steps of:
i) identifying all nodes of which only a parent terminal is connected to a parent node (S1);
ii) detecting whether all nodes are identified; if not, go to step iii) (S2);
iii) identifying a next unidentified node having the lowest node number which is set as Nn (S3);
iv) if connections are detected at child terminals of said node having the number Nn, go to step v); otherwise return to step iii) (S4);
v) identifying an unidentified child terminal having a connection thereto and having the highest terminal number which is set as Tn, and assigning said child terminal to an unidentified parent terminal of a node having a node number equal to Nn-1 (S5);
vi) if more unidentified child terminals having connections of said node having the number Nn are detected, go to step vii), otherwise return to step ii) (S6);
vii) identifying an unidentified child terminal of said node having the number Nn, which has the largest terminal number smaller than Tn, and ass igning said child terminal to an unidentified parent terminal of a node having the largest node number smaller than Nn; and returning to step vi) (S7).

If a plurality of nodes, e. g. according to the example explained above, is connected to a network, initially a user may not have a detailed knowledge about the configuration of said network, in other words which node is connected to which other node. As for consequence, the user may have a lack of further information with respect to additional properties of said nodes.

By performing said method with, for example, the eight nodes I-VIII according to the above example, it is possible to clearly identify the topology of said plurality of nodes to obtain properties of said nodes. The following gives a detailed explanation of performing the method comprising first to seventh steps S1 to S7 as shown in Fig. 3 for the above example of the eight nodes I to VIII:

At first, the first node I, the second node II, the fifth node V and the sixth node VI, having the numbers "0", "1", "4" and "5", respectively, are detected in a first step S1. Said nodes are the leaf nodes since only a parent terminal thereof is connected to a parent node. Subsequently, the method proceeds with a second step S2) according to which it is detected whether there are more unidentified nodes. Since there are still more nodes connected to the network, which have not been identified yet, the method proceeds with a third step S3 in which a next unidentified node having the lowest node number, i. e. the third node III having the number "2" is identified. The node number "2" of said node is set as Nn.

Next, it is detected in a fourth step S4 whether said node having the number Nn, i. e. the third node III having the number "2", comprises child terminals having connections thereto. Since in the present case the third node III has a connection at its child terminal P1, the method proceeds with a fifth step S5, wherein in general a child terminal having the highest number is identified and said number is set as Tn. Further in general, said step S5 defines that said child terminal is assigned to an unidentified parent terminal of a node having a node number equal to Nn minus 1. In detail, in the present case, the child terminal P1 of the third node III having the number "2" is identified in step S5. Further, since the parent terminal P2 of the second node II having the node number "1" is yet unidentified, and its node number "1" is in accordance with the equation 2-1=1, said child terminal P1 of the third node III is assigned to the parent terminal P2 of the second node II having the number "1".

In the following, the method proceeds to a sixth step S6 in which it is detected if there are more unidentified child terminals of said node having the number Nn which have connections. In case that more unidentified child terminals are detected, the method proceeds with a seventh step S7; otherwise it returns back to the second step S2. Here, since the third node III has no more unidentified child terminals, the method returns back to step S2.

In a next loop, it is found in the second step S2 that there are still more unidentified nodes, such that the method proceeds with the third step S3 in which the next unidentified node having the lowest node number is the fourth node IV having the number "3". Again, the node number "3" is set as Nn. Since it is detected in the fourth step S4 that the fourth node IV has connections at its child terminals, the method proceeds with the fifth step S5. According to the instructions defined therein, the child terminal P2 of the fourth node IV is identified as an unidentified child terminal of said node having the highest terminal number, wherein "2" is set as Tn. Said child terminal P2 is assigned to the unidentified parent terminal P0 of the third node III having the node number "2".

According to the sixth step S6 in which more unidentified child terminals of said fourth node IV are detected which have connections, the method proceeds with the above-mentioned seventh step S7 in which generally an unidentified child terminal having the largest number smaller than Tn is identified and assigned to an unidentified parent terminal of a node having the largest node number smaller than Nn. In the present case, with respect to the fourth node IV, "1" is the largest number of an unidentified child terminal, wherein "2" is set as Tn as mentioned above with respect to the fifth step S5. As for consequence, since 1<Tn=2, the child terminal P1 of the fourth node IV is assigned to the parent terminal P0 of the first node I having the node number "0". Thereafter, the method returns to the sixth step S6, and because no more unidentified child terminals of the fourth node IV are detected which have connections, the methods further returns to the second step S2.

In a further loop, it is detected again in the second step S2 that there are still further unidentified nodes such that the method proceeds with the third step S3. According to the instructions defined therein, the seventh node VII having the node number "6" is identified as a next unidentified node having the lowest node number. Said node number "7" is set as Nn. Since it is detected in the fourth step S4 that the seventh node VII comprises child terminals having connections thereto, the method proceeds with the fifth step S5 in which the child terminal P1 of the seventh node VII is identified as an unidentified child terminal of said node, which has a connection thereto and which has the highest terminal number. Further, said child terminal P1 is assigned to the unidentified parent terminal P1 of the sixth node VI having the node number "5". Since it is detected in the sixth step S6 that the seventh node VII has no more unidentified child terminals which have a connection thereto, the method returns to the second step S2.

Again, it is detected in the second step S2 that not all nodes are identified yet. As for result, the method proceeds with the third step S3 in which the eighth node VIII having the node number "7" is identified as a next unidentified node having the lowest node number. The node number "7" is set as Nn. After it is detected in the fourth step S4 that the eighth node VIII comprises child terminals having connections thereto, the method proceeds with the fifth step S5 in which the child terminal P2 of the eighth node VIII is identified as an unidentified child terminal having a connection thereto and having the highest terminal number. Accordingly, "2" is set as Tn. Further, said child terminal P2 is assigned to the unidentified parent terminal P0 of the seventh node VII having the node number "6" which is in accordance with the requirement of Nn-1, i.e. the equation 7-1=6 as defined in the fifth step S5 is fulfilled.

Since more unidentified child terminals of the eighth node VIII are identified in the sixth step S6, which have connections thereto, the method proceeds with the seventh step S7 according to which the child terminal P1 of the eighth node VIII is identified as the child terminal of said node having the largest number smaller than Tn, i.e. 0<Tn=2, and is assigned to the unidentified parent terminal P0 of the fifth node V having the node number "4". Returning to the sixth step S6, it is detected that the eighth node VIII still has an unidentified child terminal having a connection thereto such that the method proceeds again with the seventh step S7. Next, the child terminal P0 of the eighth node VIII is identified as the next unidentified child terminal having the largest number smaller than Tn, and is assigned to the unidentified parent terminal P0 of the fourth node IV having the node number "3".

Since no more unidentified child terminals having connections thereto are detected for the eighth node VIII, which is the root node for the above example, the method returns to the second step S2. Because it is detected in this step that all nodes connected to the network are identified, the method proceeds with the eighth step S8 in which the method is finished.

As for result, after the preferred embodiment of said method has been terminated, there are no more unidentified connections with respect to the plurality of nodes I-VIII of the above example. In the following Table 2, detailed information with respect to the connection status of each terminal of the nodes having the numbers "0"-"7" connected to the network are presented:

**Table 2**

| **NODE NUMBER** | **P0** | **P1** | **P2** |
|---|---|---|---|
| 0 / LEAF | P → N3-P1 | | |
| 1/ LEAF | | | P → N2-P1 |
| 2 | P → N3-P2 | C → N1-P2 | |
| 3 | P → N7-P0 | C → N0-P0 | C → N2-P0 |
| 4/ LEAF | P → N7-P1 | | |
| 5/ LEAF | | P → N6-P1 | |
| 6 | P → N7P2 | C → N5-P1 | |
| 7/ ROOT | C → N3P0 | C → N4-P0 | C → N6-P0 |

In accordance with the explanations made above, in the first column the first, second, fifth and sixth node, having the numbers "0", "1", "4" and "5", respectively, are indicated as leaf nodes, respectively. Further, the eighth node VIII having the number "7" is indicated as root node.

In each of the columns assigned to the respective terminals P0, P1 and P2, the corresponding connection status is indicated. By way of example, the first node I having the number "0" has one active terminal, i. e. terminal P0, wherein the entry "P0 → N3-P1" indicates that the terminal P0 of said first node I serves as parent terminal which is connected to the terminal P1 of the fourth node IV having the number "3". The other entries in Table 2 are not further explained in detail since the respective connection status of each terminal of the other nodes II-VIII can be taken in an analogous manner from the explanation for the first node I having the number "0", as given above.

The following explains a specific example which advantageous use said method may have for an user. Assuming that the network is a home network to which consumer-electronic devices are connected, the fourth node IV having the number "3" may be a TV-set. The terminal P1 thereof may be located at its front side, wherein the terminals P0 and P2 are located on its rear side. After performing the preferred embodiment of said method, it is revealed that the first node I having the number "0" is connected to the front side of said TV-set, i.e. said fourth node IV, and further that the third node III having the number "2" and the eighth node VIII having the number "7" are connected to the rear side of said TV-set. Based on this information which might be forwarded to a registry of the network, the user learns that the first node I having the number "0", which may be a portable camera in the form of a camcorder, for example, got the portable property.

According to another preferred embodiment of the invention, said method is repeated after each bus-reset within said network. As for consequence, the user has not to deal with any kind of set-up with respect to the configuration of the network, and will be directly informed about any change within the topology of the network, which may occur due to connecting or disconnecting any kind of node.

## Claims

1. Method for evaluating information about a plurality of nodes (I-VIII) connected to a network, wherein each node comprises at least one terminal, the method comprising the steps of:
- detecting a connection status of said at least one terminal of each node (I-VIII),
- identifying a topology of said plurality of nodes (I-VIII).
- detecting further information about said at least one terminal of each node from a self-ID packet sent from a respective node to the network, said self-ID packet containing further information about said respective terminal of each node,
- deriving a property of said at least one node from said further information, which property indicates whether said device is stationary or portable,
- providing a user with the information which devices, representing nodes, of said network are stationary and which devices are portable.

2. Method according to claim 1, **characterized in that** said further information comprises
- a physical location of said at least one terminal at a device representing said node, and/or
- a specific plug type of said at least one terminal.

3. Method according to anyone of the preceding claims, **characterized in that** said plurality of nodes (I-VIII) includes parent nodes and child nodes, wherein
- said connection status of said at least one terminal of each node is whether said terminal is absent from said network, inactive, or active and connected to a parent node or to a child node.

4. Method according to anyone of the preceding claims, **characterized in that** each node is given a specific node number ("0" - "7") according to an enumeration strategy.

5. Method according to claim 4, **characterized in that** said enumeration strategy is the enumeration strategy of an IEEE 1394 bus.

6. Method according to one of claims 4 or 5, **characterized by** the further steps of: .
i) identifying all nodes of which only a parent terminal is connected to a parent node (S1);
ii) detecting whether all nodes are identified; if not, go to step iii) (S2);
iii) identifying a next unidentified node having the lowest node number which is set as Nn (S3);
iv) if connections are detected at child terminals of said node having the number Nn, go to step v); otherwise return to step iii) (S4);
v) identifying an unidentified child terminal having a connection thereto and having the highest terminal number which is set as Tn, and assigning said child terminal to an unidentified parent terminal of a node having a node number equal to Nn-1 (S5);
vi) if more unidentified child terminals having connections of said node having the number Nn are detected, go to step vii), otherwise return to step ii) (S6);
vii) identifying an unidentified child terminal of said node having the number Nn, which has the largest terminal number smaller than Tn, and assigning said child terminal to an unidentified parent terminal of a node having the largest node number smaller than Nn; and returning to step vi) (S7).

7. Method according to anyone of the preceding claims, **characterized in that** it is performed after each bus reset within said network.

8. Method according to anyone of the preceding claims, **characterized in that** said network is based on the IEEE 1394 standard.

9. Method according to anyone of the preceding claims, **characterized in that** said property includes
- "node is connected to front side of another node" and "node is connected to rear side of another node".

10. Apparatus for evaluating information about a plurality of nodes connected to a network, **characterized in that** if comprises means to perform each of the method steps as defined in anyone of claims 1 to 9.

11. Computer program product comprising computer program means adapted to perform all steps defined in anyone of claims 1 to 9, when said computer program product is executed on a computer, digital signal processor or the like.

## Patentansprüche

1. Verfahren zur Auswertung von Informationen über eine Mehrzahl von mit einem Netzwerk verbundenen Knoten (I-VIII), wobei jeder Knoten wenigstens einen Anschluss aufweist, mit folgenden Verfahrensschritten:
- Detektieren eines Verbindungsstatus des wenigstens einen Anschlusses von jedem Knoten (I-VIII),
- Identifizierung einer Topologie der Mehrzahl von Knoten (I-VIII),
- Detektieren weiterer Information über den wenigstens einen Anschluss von jedem Knoten von einem Eigen-ID-Paket, welches von einem entsprechenden Knoten an das Netzwerk gesendet wird, wobei das Eigen-ID-Paket weitere Informationen über den entsprechenden Anschluss jedes Knotens enthält,
- Ableiten einer Eigenschaft des wenigstens einen Knotens aus den weiteren Informationen, wobei die Eigenschaft anzeigt, ob die Einrichtung stationär oder tragbar ist,
- Versorgen eines Benutzers mit der Information, welche Einrichtungen des Netzwerks stationär und welche Einrichtungen tragbar sind, wobei die Einrichtungen Knoten entsprechen.

2. Verfahren gemäß Anspruch 1, **dadurch gekennzeichnet, dass** die weiteren Informationen umfassen:
- eine physikalische Lage des wenigstens einen Anschlusses an einer den Knoten repräsentierenden Einrichtung, und/oder
- einen bestimmten Steckertyp des wenigstens einen Anschlusses.

3. Verfahren gemäß einem der vorstehenden Ansprüche, **dadurch gekennzeichnet, dass** die Mehrzahl von Knoten (I-VIII) Mutterknoten und Tochterknoten umfasst, wobei
- der Verbindungsstatus des wenigstens einen Anschlusses jedes Knotens bedeutet, ob der Anschluss von dem Netzwerk abwesend, inaktiv oder aktiv ist und mit einem Mutterknoten oder mit einem Tochterknoten verbunden ist.

4. Verfahren gemäß einem der vorstehenden Ansprüche, **dadurch gekennzeichnet, dass** jedem Knoten eine bestimmte Knotennummer ("0" - "7") zugeordnet wird, gemäß einer Aufzählungsstrategie.

5. Verfahren gemäß Anspruch 4, **dadurch gekennzeichnet, dass** die Aufzählungsstrategie die Aufzählungsstrategie eines IEEE 1394 Busses ist.

6. Verfahren gemäß einem der Ansprüche 4 oder 5, **gekennzeichnet durch** die folgenden Schritte:
i) Identifizieren aller Knoten, von welchen nur ein Mutteranschluss mit einem Mutterknoten verbunden ist (S1);
ii) Detektieren, ob alle Knoten identifiziert wurden; falls nein, gehe zum Schritt iii) (S2);
iii) Identifizieren eines folgenden nicht-identifizierten Knotens mit der niedrigsten Knotennummer, welche als Nn festgelegt wird (S3);
iv) falls Verbindungen als Tochteranschlüsse des Knotens mit der Nummer Nn detektiert werden, gehe zum Schritt v), andernfalls gehe zurück zum Schritt (iii) (S4);
v) Identifizieren eines nicht-identifizierten Tochteranschlusses mit einer dazugehörigen Verbindung, welcher die höchste Anschlussnummer aufweist, welche als Tn festgesetzt wird, und Zuordnen des Tochteranschlusses zu dem nicht-identifizierten Mutteranschluss eines Knotens, welcher eine Knotennummer aufweist, die gleich Nn-1 ist (S5);
vi) falls weitere nicht-identifizierte Tochteranschlüsse mit Verbindungen des Knotens mit der Nummer Nn detektiert werden, gehe zum Schritt vii), andernfalls gehe zurück zu Schritt ii) (S6);
vii) Identifizieren eines nicht-identifizierten Tochteranschlusses des Knotens mit der Nummer Nn, welcher die größte Anschlussnummer hat, die kleiner als Tn ist, und Zuordnen des Tochteranschlusses zu einem nicht-identifizierten Mutteranschluss eines Knotens mit der größten Knotennummer, die kleiner als Nn ist; und Zurückgehen zum Schritt vi) (S7).

7. Verfahren gemäß einem der vorstehenden Ansprüche, **dadurch gekennzeichnet, dass** es nach jedem Rücksetzen des Busses innerhalb des Netzwerks ausgeführt wird.

8. Verfahren gemäß einem der vorstehenden Ansprüche, **dadurch gekennzeichnet, dass** das Netzwerk auf dem IEEE 1394 Standard basiert.

9. Verfahren gemäß einem der vorstehenden Ansprüche, **dadurch gekennzeichnet, dass** die Eigenschaft beinhaltet:
- "Knoten ist mit der Vorderseite eines anderen Knotens verbunden" und "Knoten ist mit der Rückseite eines anderen Knotens verbunden".

10. Vorrichtung zur Auswertung von Informationen über eine Mehrzahl mit einem Netzwerk verbundenen Knoten, **dadurch gekennzeichnet, dass** es Einrichtungen umfasst zur Durchführung jeder der Verfahrensschritte, welche in einem der Ansprüche 1 bis 9 definiert sind.

11. Computerprogrammprodukt, umfassend Computerprogrammeinrichtungen, eingerichtet zur Durchführung aller Schritte, welche in einem der Ansprüche 1 bis 9 definiert sind, falls das Computerprogrammprodukt auf einem Computer, digitalen Signalprozessor oder dergleichen ausgeführt wird.

## Revendications

1. Dispositif pour l'évaluation d'informations concernant une pluralité de noeuds (I-VIII) connectés à un réseau, dans lequel le noeud comprend au moins un terminal, le procédé comprenant les étapes consistant à :
- détecter d'autres informations concernant ledit au moins un terminal de chaque noeud à partir d'un paquet d'auto-identification (self-ID) émis par un noeud respectif en direction du réseau, ledit paquet d'auto-identification contenant d'autres informations concernant ledit terminal respectif de chaque noeud,
- déterminer une propriété dudit au moins un noeud à partir desdites autres informations, laquelle propriété indique si ledit dispositif est fixe ou portable,
- fournir à un utilisateur l'information indiquant quels dispositifs, qui représentent des noeuds, dudit réseau sont fixes et quels dispositifs sont portables.

2. Procédé selon la revendication 1, **caractérisé en ce que** lesdites autres informations comprennent
- un emplacement physique dudit au moins un terminal dans un dispositif représentant ledit noeud, et/ou
- un type de broche spécifique dudit au moins un terminal.

3. Procédé selon l'une quelconque des revendications précédentes, **caractérisé en ce que** ladite pluralité de noeuds (I-VIII) inclut des noeuds parents et des noeuds enfants, selon lequel
- ledit état de connexion dudit au moins un terminal de chaque noeud indique le fait que ledit terminal est absent dudit réseau, est inactif ou est actif et connecté à un noeud parent ou à un noeud enfant.

4. Procédé selon l'une quelconque des revendications précédentes, **caractérisé en ce que** chaque noeud reçoit un numéro de noeud spécifique ("0"-"7") conformément à une stratégie de numérotation.

5. Procédé selon la revendication 4, **caractérisé en ce que** ladite stratégie de numérotation est la stratégie de numérotation d'un bus IEEE 1394.

6. Procédé selon l'une quelconque des revendications 4 ou 5, **caractérisé par** les autres étapes consistant à :
i) identifier tous les noeuds, dont seul un terminal parent est connecté à un noeud parent (S1);
ii) détecter si tous les noeuds sont identifiés; si ce n'est pas le cas, passer au pas iii) (S2);
iii) identifier un noeud suivant non identifié possédant le plus petit numéro de code qui est réglé en tant que Nn (S3);
iv) si des connexions sont détectées au niveau de terminaux enfants dudit noeud possédant le numéro Nn, passer au pas v); sinon revenir au pas iii) (S4);
v) identifier un terminal enfant non identifié comportant une connexion et possédant le numéro du terminal le plus élevé qui est réglé en tant que Tn, et affecter ledit terminal enfant à un terminal parent non identifié d'un noeud possédant un numéro de noeud égal à Nn-1 (S5);
vi) si un plus grand nombre de terminaux enfants non identifiés possédant des connexions dudit noeud ayant le numéro Nn sont détectés, passer au pas vii), sinon revenir au pas ii) (S6);
vii) identifier un terminal enfant non identifié dudit noeud comportant le nombre Nn, qui possède le numéro de terminal maximum inférieur à Tn, et affecter ledit terminal enfant à un terminal parent non identifié d'un noeud possédant le numéro de noeud inférieur à Nn; et revenir au pas vi) (S7).

7. Procédé selon l'une quelconque des revendications précédentes, **caractérisé en ce qu'**il est mis en oeuvre après chaque remise à l'état initial du bus à l'intérieur dudit réseau.

8. Procédé selon l'une quelconque des revendications précédentes, **caractérisé en ce que** ledit réseau est basé sur la norme IEEE 1394.

9. Procédé selon l'une quelconque des revendications précédentes, **caractérisé en ce que** ladite propriété inclut
- "le noeud est connecté au côté avant d'un autre noeud" et "le noeud est connecté au côté arrière d'un autre noeud".

10. Dispositif pour évaluer une information concernant une pluralité de noeuds connectés à un réseau, **caractérisé en ce qu'**il comprend des moyens pour exécuter chacun desdits pas du procédé, tels que définis dans l'une quelconque des revendications 1 à 10.

11. Produit de programme informatique comprenant des moyens à programme informatique adaptés pour exécuter toutes les étapes définies dans l'une quelconque des revendications 1 à 10, lorsque ledit produit de programme informatique est exécuté sur un ordinateur, un processeur de signaux numériques ou analogue.
